# EUROPEAN PATENT SPECIFICATION

(11) **EP 0 467 512 B1**
(45) Date of publication and mention of the grant of the patent: **24.01.1996**
(21) Application number: 91304423.6
(22) Date of filing: 16.05.1991
(51) Int. Cl.: B60R 16/02

(54) **Communication system for vehicle**
Kommunikationssystem für Kraftfahrzeuge
Système de communication pour véhicule

(30) Priority: 16.04.1991 JP 84152/91; 21.05.1990 JP 130526/90
(43) Date of publication of application: 22.01.1992
(73) Proprietor: NIPPONDENSO CO., LTD., Kariya-city Aichi-pref., 448 (JP)
(72) Inventor: Ina, Katsuhiro, Okazaki-city, Aichi-pref. (JP)
(74) Representative: Dempster, Benjamin John Naftel

(56) References cited:
- GB-A- 2 038 033
- US-A- 4 736 116
- PATENT ABSTRACTS OF JAPAN vol. 10, no. 60 (P-435)(2117) 11 March 1986 & JP-A-60 204 004 (FUJI DENKI SEIZO KK) 15 October 1985
- PATENT ABSTRACTS OF JAPAN vol. 7, no. 146 (P-206)(1291) 25 June 1983 & JP-A-58 058 605 (PIONEER KK) 7 April 1983

## Description

The present invention relates to a communication system for a vehicle, more particularly a system in which a plurality of control units (hereinafter referred to as ECU) are connected by a communication signal line to perform control.

In multiplex vehicle communication systems processing units (hereinafter referred to as the CPU) having the same communication processing capacity are carried on each of the ECU's such as an ECU of the door lock system for controlling a door lock, an ECU of the engine system for controlling an engine etc., thereby the communication of the ECU's is realized.

However, in such systems, there is an ECU which performs only input of a signal or control of an actuator, an ECU which also performs control of other control systems and the like, and a required communication processing capacity differs depending on a control system, whereas the CPU having the same communication processing capacity is carried on the ECU of every system, so that efficiency is extremely bad.

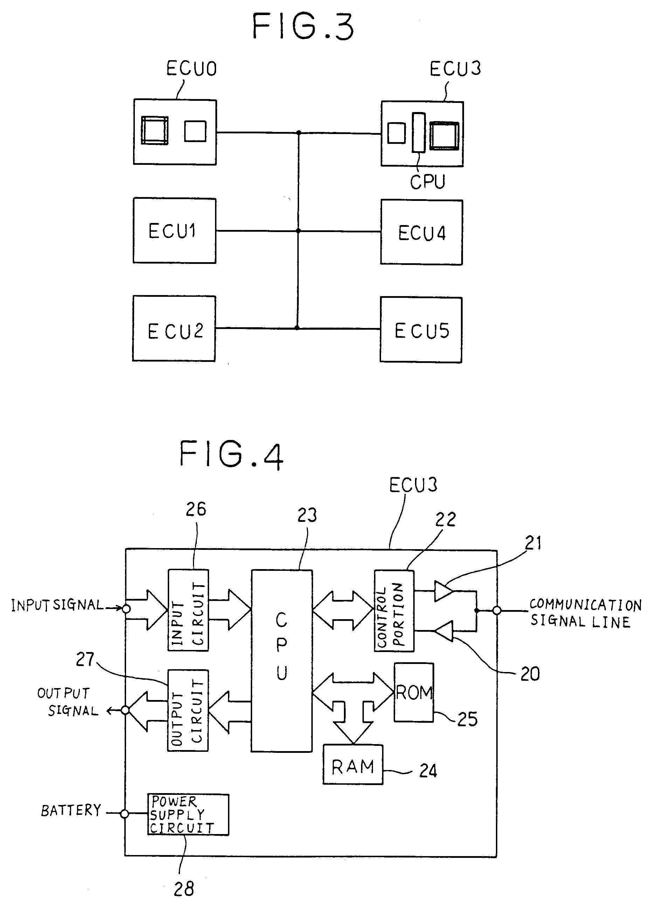

Thus, consideration has been given to a communication system for a vehicle such as shown in Figure 3, in which ECU's O to 5 are connected by a communication signal line to enable mutual communication. Only the ECU 3 contains an arithmetic operation or communication processing function using the CPU such as a microcomputer as the central ECU, while other ECU O to ECU 2, ECU 4, and ECU 5 have a communication function and inputting arithmetic operation function as peripheral ECU's.

These peripheral ECU's are arranged at various places in the vehicle in order, for example, to control door locks, an engine, winkers, lamps and the like. The peripheral ECU's input a switch signal, a detection signal and the like in the vicinity thereof to send to the communication signal line, and control lamps, actuators and the like on the basis of data received from the communication signal line (JP-A-62-189838, JP-A-61-189839).

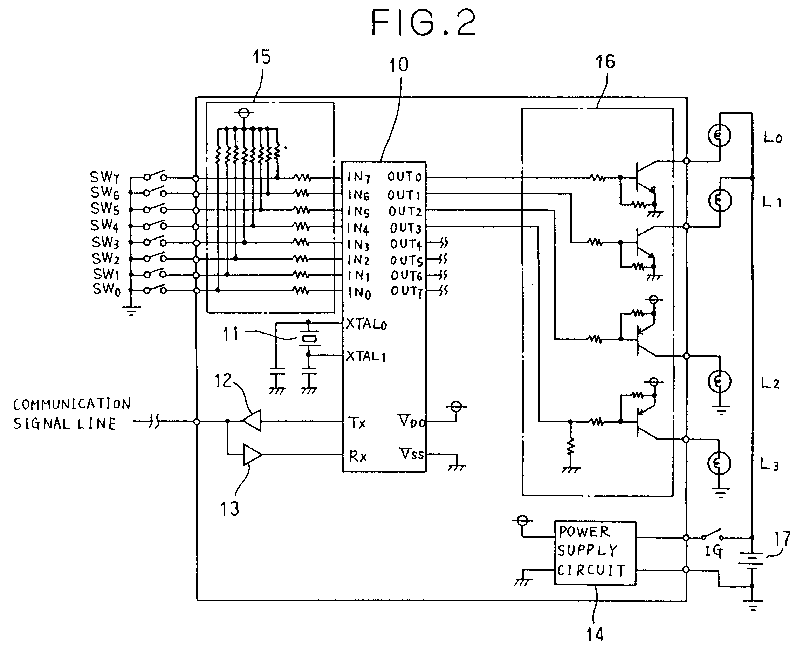

As shown in the circuit diagram of Figure 2, each peripheral ECU contains a communication IC 10 which operates at an oscillation frequency of an oscillation element 11 connected with an XTAL O terminal and an XTAL 1 terminal. The communication IC 10 inputs states of external switches SW O to SW 7 from signal input terminals IN o to IN 7 thereof via an input circuit 15. States of the IN O to IN 7 are outputted to the communication signal line as transmission date via a driver 12 from a TX terminal by means of a predetermined method. In addition, communication data inputted to an RX terminal of the communication IC 10 via a receiver 13 from the communication signal line in accordance with a predetermined communication method is outputted from signal output terminals OUT 0 to OUT 7 of the communication IC 10.

The communication signal line is connected with a plurality of peripheral ECU's (the ECU O to ECU 2, ECU 4, and ECU 5 in Figure 3) and also with the central ECU 3 in Figure 3 having the arithmetic operation processing function, wherein signals inputted to each unit of the peripheral ECU's are collected in the ECU 3 via the communication signal line, and the arithmetic operation processing function is performed in the ECU 3 in accordance with the inputting information. The result of processing by the ECU 3 is transmitted to the peripheral ECU's via the communication signal line, so that the lamps or the actuators connected thereto are controlled by the outputs of the peripheral ECU.

At this time, in the system for performing the above mentioned operation, as shown in Figure 2, in order to realise to make the peripheral ECU having only the inputting and outputting functions of signals and the communication function to be in a low cost or compact, simple ones are required for the inputting circuit 15 and the outputting circuit 16. However in the circuit shown in Figure 2, when the IG switch is ON to connect the system to the electric power supply, until the communication data is received from the communication signal line, initial states of the output terminals OUT O to OUT 7 cannot be established only by internal information of each peripheral ECU. This means that a desired control function can not be performed in the initial state until the data is ascertained by the ECU 3. For example, in Figure 2, provided that it is required that the lamps L0 to L2 are OFF and the lamp L3 is ON when the IG switch is ON, if the output terminals OUT 0 to OUT 7 are "H" in the initial state, the lamps L) and L1 are lit, and L2 and L3 are not lit. On the other hand, in the output terminals OUT 0 to OUT 7 are "L" in the initial state, the lamps L) and L1 are not lit, and L2 and L3 are lit. Thus, it is impossible for the lamps L0 to L2 to be OFF and only the lamp L3 to be ON by setting the initial state of the output terminals OUT 0 to OUT 7. It may, however, be possible that a NOT circuit added between an output transistor for driving the lamps and the output terminals of the communication IC 10 can achieve a necessary state, but it is not secured whether the internal state of the peripheral ECU is "H" or "L", so that the circuits must be complicated to secure the initial state of lamps L0 to L3.

US-A-4736116, showing the basic features according to the preamble of claim 1, relates to a power up sequencing apparatus for a mobile robot. A mobile module of the robot operates and monitors the action of a drive motor and a steering motor. The mobile module receives signals from the main robot CPU. For powering up, a power cage includes six power units. In the powering up sequence, the turning on of subsystems related to the main robot CPU is temporally spaced and the last signal to be sent is an enable signal to a motor amplifier which enables the robot to move.

One object of the present invention is to enable establishment of a desired initial state without requiring individual complicated circuits when an initial state is individually established in a receiving station for its control drive items.

In accordance with the present invention, we propose a communication system for a vehicle, including a receiving station comprising communication means for receiving a communication signal from a sending station, outputting means for controlling one or more driven means in response to the communication signal, continuity control means for isolating the outputting means from the communication means following powering up of the receiving station, the outputting means being operable independently of the communication signal when the outputting means is isolated, characterised in that the continuity control means is arranged to isolate the outputting means from the communication means until the communication means receives a communication signal from the sending station.

The system may further comprise electric power supply voltage detecting means for detecting the electric power supply voltage of the battery, the continuity control means comprising means for electrically separating the connection between the communication means and the outputting means during a period from a state in which the voltage detected by the electric power supply voltage detecting means has risen from a low voltage state to a predetermined voltage until the communication means receives the communication signal from the sending station.

An embodiment of the present invention will now be described with reference to the accompanying drawings in which:
Figure 1 is a block diagram of a communication IC of a vehicle communication system;
Figure 2 is a block diagram of a peripheral ECU in the system;
Figure 3 is a block diagram of a vehicle communication system;
Figure 4 is a block diagram of a central ECU in the system;
Figure 5(A) is a figure showing a format example of an information signal;
Figure 5(B) is a figure showing a format example of a control signal;
Figure 6 is a flowchart showing a processing procedure of the CPU; and
Figure 7 is a diagram showing a part of a serial communication control circuit.

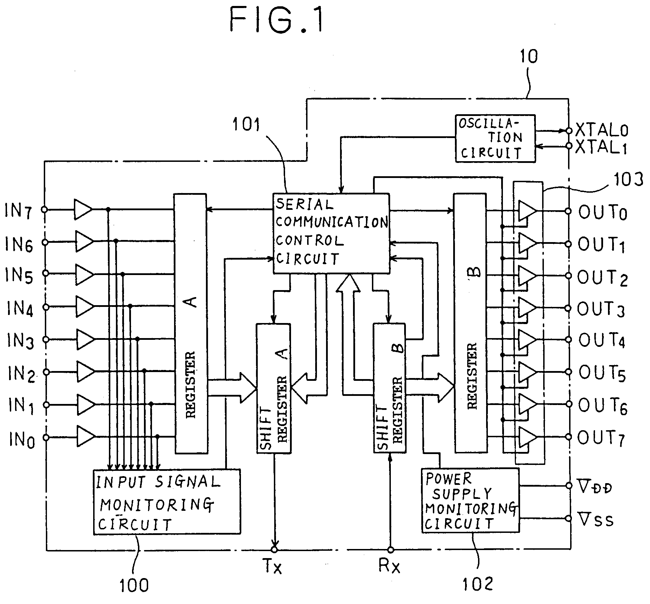

The communication IC 10 of each peripheral ECU (see Figure 2) is constructed in a manner as shown in Figure 1, and output terminals OUT 0 to OUT 7 of the communication IC 10 are made in a high impedance state until data which should be outputted from a communication signal line is ascertained, thereby a state during a period between ON of an electric power supply and receiving of the data to be outputted can be established to be an optional state with ease.

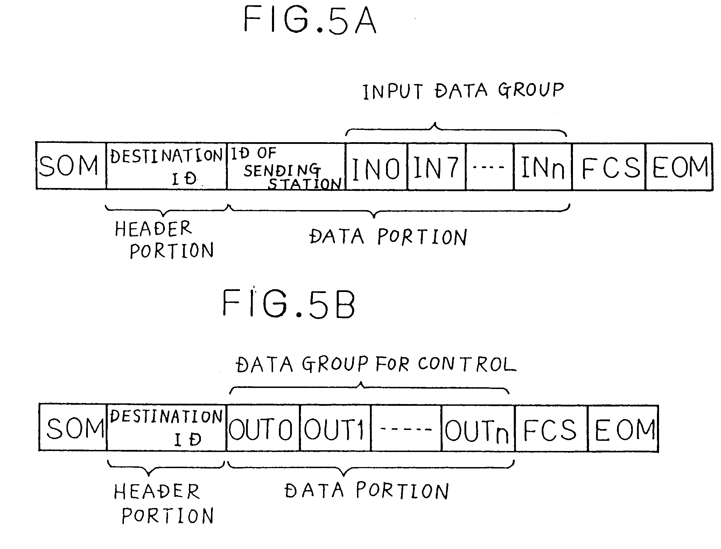

Operation of the communication IC 10 shown in Fig. 1 will be explained hereinafter together with operation of the communication system shown in Fig. 3. As shown in Fig. 2, signal input terminals IN 0 to IN 7 of the communication IC 10 are connected with switches SW 0 to SW 7 via an input circuit 15. The states of the signal input terminals IN 0 to IN 7 are monitored by an input signal monitoring circuit 100, and when there is a change in the states, a sending start signal to the communication signal line is transmitted to a serial communication control circuit 101. The serial communication control circuit 101 transfers data from a register A to a shift register A, and a header portion to distinguish the data from date of other ECU's and a communication error detecting code portion FCS such as a CRC code which make it possible to detect an error are added to output from a TX terminal as an information signal constructed by a format as shown, for example, in Fig. 5A. This TX terminal is connected with the communication signal line via driver 12 shown in Fig. 2, and the data of the input terminals IN 0 to IN 7 are transmitted to the ECU 3 shown in Fig. 3 as the information signal via the communication signal line.

In Fig. 5A, SOM (Start of Message) and EOM (End of Message) indicate the start and the end of a message signal represented by own frame, respectively. In addition, a header portion is constructed with an ID indicating a destination (CPU of the ECU 3), which has been already established in the communication IC 10. In addition, a data portion is constructed with an ID indicating the own station and an input data group comprising input signals inputted from the signal input terminals IN 0 to IN 7. In addition, FCS (Frame Check Sequence) is a communication error detecting portion, which is expressed by the CRC code in the present embodiment.

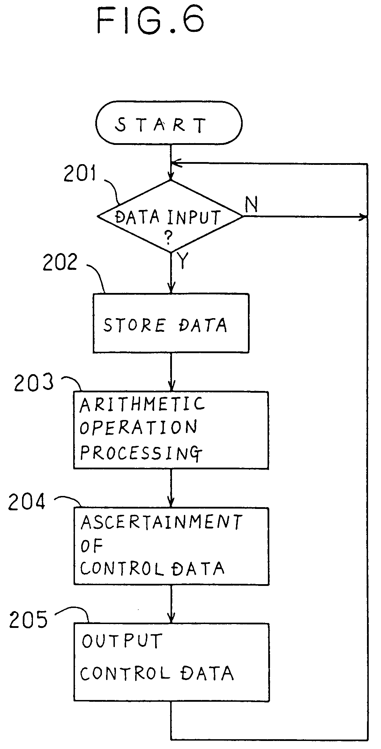

As shown in Fig. 4, the information signal transmitted to the ECU 3 passes a communication control portion 22 in the ECU 3 via a receiver 20 connected with the communication signal line to be transmitted to the CPU 23. At this time, in the communication control portion 22, it is confirmed whether the sent signal has been sent destined to the ECU 3 or not according to the destination ID of the header portion of the signal, and when it is destined to the ECU 3, the communication error detecting code FCS is further checked to investigate that there is no communication abnormality, so as to input the data of the data portion comprising the ID indicating the sending station and the input data group. And in the CPU 23, processing is performed according to, for example, a flowchart shown in Fig. 6. In the step 201, it is judged whether or not the data portion of the information signal from the peripheral ECU is inputted to the CPU 23. If the decision is YES, in the next step 202, the input data is stored in a RAM 24. Therefore, data from the peripheral ECU's are collected and stored in RAM 24. On the basis of the stored each data, in the step 203, predetermined arithmetic operation processing necessary for the control performed in each ECU, such as judgement, arithmetic operation and the like, are performed. And in the next step 204, data for control is ascertained after performing data conversion suitable for one to be sent to, which is outputted to the communication control portion 22 in the step 205 and is further transmitted to the communication signal line via the driver 21 as a control signal constructed with a format shown, for example, in Fig. 5B (see Fig. 4).

Incidentally, the control signal shown in Fig. 5B has its data portion constructed with a data group for control suitable for one to be sent to ascertained by the processing of the CPU 23 such as for example data for control assigned to each output terminal in order to drive a control system such as for example lamps L0 to L3 and the like connected to output terminals OUT 0 to OUT 7 in Fig. 2. And in the communication control portion 22, to the data group are added the ID to be sent to indicating the destination (the header portion), the communication error detecting code FCS, the SOM, and the EOM to be transmitted from the driver 21 to the communication signal line. And this control signal is inputted to an RX terminal of the communication IC 10 shown in Fig. 1 via the receiver 13 shown in Fig. 2.

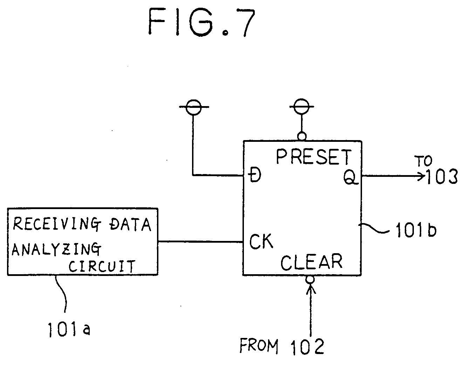

When the communication data (the control signal) received from the RX terminal is inputted to a shift register B, it is transmitted to a serial communication control circuit 101 that the data has been received. As shown in Fig. 7, the serial communication control circuit 101 contains a receiving data analyzing circuit 101a. This receiving data analyzing circuit 101a checks the header portion of the receiving data to confirm that it is the communication data destined to the own station. When it is the data destined to the own station, the communication error detecting code expressed by the CRC code and the like is checked to investigate the presence or absence of communication abnormality. When this receiving data analyzing circuit 101a has distinguished that it is the data destined to the own station and there is no abnormality, then according to the distinction result, the serial communication control circuit 101 transfers the data in the shift register B to a register B so as to output the receiving data from the output terminals OUT 0 to OUT 7. At this time, the data for control in each of the output terminals OUT 0 to OUT 7 is such own which the data portion of the control signal shown in Fig. 5B is assigned to each output terminal as such.

And on the basis of the assigned data for control, output transistors and the like in an output circuit 16 are driven and driven items such as the lamps, the actuators and the like are controlled.

In addition, as shown in Fig. 1, there is provided an electric power supply monitoring circuit 102 for detecting whether the electric power is supplied from an electric power supply circuit 14 (Fig. 2) which is connected to a battery via a IG switch or whether an electric power supply voltage has been decreased to a level which makes impossible to maintain the data stored in the register B. This electric power supply monitoring circuit 102 outputs a signal of the L level when the electric power supply voltage is lower than a predetermined level, whereas it outputs a signal of the H level in the case of being higher than a predetermined level, and with respect to signal generation thereof, a delay circuit is contained for providing delay of a certain period. An output from this electric power supply monitoring circuit 102 is applied to a CLEAR terminal of a flip flop 101b of the D type contained in the serial communication control circuit 101. In addition, the above mentioned receiving data analyzing circuit 101a applies a clock signal for outputting a pulse once to a clock terminal of the flip flop 101b when it distinguishes normal input of the above mentioned receiving data. Therefore, when the electric power supply voltage decreases, the flip flop 101b is in a resetting state, so that its output Q is in the L level, and a continuity control circuit 103 is made OFF. In addition, also immediately after the IG switch is ON to allow the electric power supply to become a normal voltage state from a low voltage state, the output Q of the flip flop 101b is maintained at the L level, and the continuity control circuit 103 is made OFF. In this manner, when the continuity control circuit 103 is made OFF, the continuity control circuit 103 prohibits a value of the register B to be outputted to the output terminals OUT 0 to OUT 7, so as to make the output terminals OUT 0 to OUT 7 to be in a high impedance state. At this time, there is provided a state in which the output terminals OUT 0 to OUT 7 depend on the external output circuit 16 of the communication IC 10 (Fig. 2) to make it possible to give a state of obeying the intention of a designer of the output circuit 16. For example, in Fig. 2 as described above, when in the case of ON for the IG switch, the lamps L0 to L2 are OFF, the lamp L3 is ON, and the lamps L0 to L3 are intended to be driven with the wiring as shown in the figure, then the output terminals OUT 0 to OUT 7 of the communication IC 10 are in a high impedance state to give a state in which the output circuit 16 is electrically separated from the communication IC 10 so that a base electric potential of each output transistor of the output circuit 16 is simply made to be the GND level or the electric power supply voltage level as shown in the figure, thereby a desired initial state thereof can be established with ease.

And after the IG switch is turned on, when first normal data is received from the RX terminal, the serial communication control circuit 101 transfers the value of the shift register B to the register B as described above. In addition, according to the receiving of the normal data, the receiving data analyzing circuit 101a generates the clock signal, so that with respect to the flip flop 101b, a state of the D terminal is outputted to the Q terminal to make the output Q to be the H level. Therefore, the continuity control circuit 103 is made ON, and the data outputs from the output terminals OUT 0 to OUT 7 are made effective, thereby control of the lamps, the actuators and the like can be performed according to the receiving data.

As described above, a communication system which is of a low cost and compact capable of performing required actuation can be realized, and the peripheral ECU can be provided, for example, at a narrow place (a door and the like) in which installation has been impossible due to a lot of harness, and space saving can be also contemplated. Incidentally, in the above mentioned example, one having both of the inputting and outputting functions has been shown in all of the peripheral ECU's, however, application may be available to a system in which peripheral ECU's for exclusively performing input and for exclusively performing output are present in a mixed manner.

Moreover, for example in Fig. 3, according to an information signal inputted by an ECU 0 (for exclusively performing input), arithmetic operation processing is performed in an ECU 3 (a central station) on the basis of the information signal, and a control signal may be sent on the basis of the processing result as an exclusive output for an ECU 5.

## Claims

1. A communication system for a vehicle, including a receiving station (ECU 3) comprising communication means (CPU) for receiving a communication signal from a sending station (ECU 0,1,2,4,5), outputting means (22) for controlling one or more driven means (21) in response to the communication signal, continuity control means (10) for isolating the outputting means (22) from the communication means following powering up of the receiving station (ECU 3), the outputting means (22) being operable independently of the communication signal when the outputting means (22) is isolated, characterised in that the continuity control means (103) is arranged to isolate the outputting means (22) from the communication means until the communication means receives a communication signal from the sending station.

2. A communication system according to claim 1, wherein the sending station (ECU 0,1,2,4,5) and the receiving station (ECU 3) are positioned remotely in the vehicle, communication between the sending station (ECU 0,1,2,4,5) and the receiving station (ECU 3) being via a communication line, outputting means (22) being arranged to control a plurality of driven means (21) in response to the communication signal received by said communication means, and the system further comprising continuity control means (103) for disconnecting the outputting means (22) from the communication means following the supply of electric power to the receiving station (ECU 3) until the communication means receives the communication signal from the sending station (ECU 0,1,2,4,5), the outputting means (22) being operable independently of the communication signal when the outputting means (22) is disconnected.

3. A system according to claim 1 or claim 2, further comprising means (102) for detecting the supply voltage of a battery (17) actuating the receiving station (ECU 3), and wherein the continuity control means (103) comprises means for electrically disconnecting the communication means and the outputting means (22) following detection of a predetermined voltage by the electric power supply voltage detecting means (102) until the communication means receives a communication signal from the sending station (ECU 0,1,2,4,5).

4. A system according to claim 3, wherein the continuity control means (103) is arranged to disconnect the communication means and the outputting means (22) also during a period in which a low voltage is detected by the detecting means (102).

5. A system according to claim 1 or claim 2, comprising receiving detecting means for detecting receipt of a first communication signal from the sending station (ECU 0,1,2,4,5), in response to which the continuity control means (103) is reset.

6. A communication system according to any preceding claim, wherein the receiving station (ECU 3) comprises outputting means (22), continuity control means (103) and
first communication means for inputting an input signal from input means to send an information signal comprising said input signal via said communication signal line,
the outputting means (22) being arranged to perform drive control of a plurality of driven means (21) on the basis of the communication signal received by the first communication means, and
the continuity control means (103) being arranged to separate the electric connection between the first communication means and the outputting means (22) during a period in which the supply of electric power to the receiving station (ECU 3) is started until the first communication means receives the communication signal from the sending station (ECU 0, 1,2,4,5), the outputting means (22) being arranged to perform drive control of said plurality of driven means (21) in a desired initial state irrelevant to said communication signal when connection between said first communication means and said outputting means (22) is electrically separated by means of said continuity control means (103),
and wherein said sending station (ECU 0,1,2, 4,5) comprises second communication means for receiving the information signal sent from the receiving station (ECU 3) via the communication signal line and for sending a control signal to the receiving station (ECU 3) as the communication signal via the communication signal line, and
arithmetic operation processing means, connected with the second communication means, for performing arithmetic operation processing on the basis of the information signal received by the second communication means and for making the control signal on the basis of a result of the arithmetic operation processing.

7. A system according to claim 6, further comprising detecting means for detecting the electric power supply voltage supplied to said receiving station (ECU 3), wherein the continuity control means (103) comprises means for electrically disconnecting the first communication means and the outputting means (22) following detection by the electric power supply voltage detecting means (102) of a predetermined voltage, until the first communication means receives the communication signal from the sending station (ECU 0,1,2,4,5).

8. A system according to claim 7, wherein the continuity control means (103) is arranged to disconnect the first communication means and the outputting means (22) also during a period in which a low voltage state is detected by the detecting means (102).

9. A system according to any of claims 1, 2 and 5, wherein the continuity control means (103) comprises receiving detecting means for detecting receipt of a first communication signal from the sending station (ECU 0,1,2,4,5) to reconnect the first communication means and the outputting means (22).

## Patentansprüche

1. Kommunikationssystem für ein Fahrzeug, das eine Empfangsstation (ECU 3) beinhaltet, die eine Kommunikationseinrichtung (CPU), die ein Kommunikationssignal von einer Sendestation (ECU 0, 1, 2, 4, 5) empfängt, eine Ausgabeeinrichtung (22), die als Reaktion auf das Kommunikationssignal eine oder mehrere Ansteuereinrichtungen (21) steuert, eine Dauersteuereinrichtung (10) beinhaltet, die die Ausgabeeinrichtung (22) von der Kommunikationseinrichtung isoliert, was einem Einschalten der Empfangsstation (ECU 3) folgt, wobei die Ausgabeeinrichtung (22) betrieblich unabhängig von dem Kommunikationssignal ist, wenn die Ausgabeeinrichtung (22) isoliert ist, dadurch gekennzeichnet, daß die Dauersteuereinrichtung (103) angeordnet ist, um die Ausgabeeinrichtung (22) von der Kommunikationseinrichtung zu isolieren, bis die Kommunikationseinrichtung ein Kommunikationssignal von der Sendestation empfängt.

2. Kommunikationssystem nach Anspruch 1, bei dem die Sendestation (ECU 0, 1, 2, 4, 5) und die Empfangsstation (ECU 3) entfernt in dem Fahrzeug angeordnet sind, eine Kommunikation zwischen der Sendestation (ECU 0, 1, 2, 4, 5) und der Empfangsstation (ECU 3) über eine Kommunikationsleitung durchgeführt wird, eine Ausgabeeinrichtung (22) angeordnet ist, um als Reaktion auf das Kommunikationssignal, das mittels der Kommunikationseinrichtung empfangen wird, eine Mehrzahl von Ansteuereinrichtungen (21) zu steuern und das System desweiteren eine Dauersteuereinrichtung (103) aufweist, die die Ausgabeeinrichtung (22) von der Kommunikationseinrichtung abtrennt, was dem Zuführen einer elektrischen Energie zu der Empfangsstation (ECU 3) folgt, bis die Kommunikationseinrichtung das Kommunikationssignal von der Sendestation (ECU 0, 1, 2, 4, 5) empfängt, wobei die Ausgabeeinrichtung (22) betrieblich unabhängig von dem Kommunikationssignal ist, wenn die Ausgabeeinrichtung (22) abgetrennt ist.

3. System nach Anspruch 1 oder 2, das desweiteren eine Einrichtung (102) aufweist, die die Versorgungsspannung einer Batterie (17) erfaßt, die die Empfangsstation (ECU 3) betätigt, und bei dem die Dauersteuereinrichtung (103) eine Einrichtung aufweist, die die Kommunikationseinrichtung und die Ausgabeeinrichtung (22) elektrisch abtrennt, was einem Erfassen einer vorbestimmten Spannung mittels der Erfassungseinrichtung (102) für eine elektrische Energieversorgungsspannung folgt, bis die Kommunikationseinrichtung ein Kommunikationssignal von der Sendestation (ECU 0, 1, 2, 4, 5) empfängt.

4. System nach Anspruch 3, bei dem die Dauersteuereinrichtung (103) angeordnet ist, um die Kommunikationseinrichtung und die Ausgabeeinrichtung (22) ebenso während einer Periode abzutrennen, bei welcher mittels der Erfassungseinrichtung (102) eine Niederspannung erfaßt wird.

5. System nach Anspruch 1 oder Anspruch 2, das eine Empfangserfassungseinrichtung aufweist, die einen Empfang eines ersten Kommunikationssignals von der Sendestation (ECU 0, 1, 2, 4, 5) erfaßt, wobei als Reaktion darauf die Dauersteuereinrichtung (103) zurückgesetzt wird.

6. Kommunikationssystem nach einem der vorhergehenden Ansprüche, bei dem die Empfangsstation (ECU 3) eine Ausgabeeinrichtung (22), eine Dauersteuereinrichtung (103) und
eine erste Kommunikationseinrichtung aufweist, die ein Eingangssignal von einer Eingabeeinrichtung einliest, um ein Informationssignal, daß das Eingangssignal aufweist, über die Kommunikationssignalleitung zu übertragen,
wobei die Ausgabeeinrichtung (22) angeordnet ist, um ein Ansteuern einer Mehrzahl von Ansteuereinrichtungen (21) auf der Grundlage des Kommunikationssignals durchzuführen, das mittels der ersten Kommunikationseinrichtung empfangen wird, und
wobei die Dauersteuereinrichtung (103) angeordnet ist, um die elektrische Verbindung zwischen der ersten Kommunikationseinrichtung und der Ausgabeeinrichtung (22) während einer Periode zu trennen, bei welcher die Versorgung einer elektrischen Energie zu der Empfangsstation (ECU 3) gestartet wird, bis die erste Kommunikationseinrichtung das Kommunikationssignal von der Sendestation (ECU 0, 1, 2, 4, 5) empfängt, wobei die Ausgabeeinrichtung (22) angeordnet ist, um ein Ansteuern der Mehrzahl von Ansteuereinrichtungen (21) in einem erwünschten Anfangszustand, der ohne Beziehung zu dem Kommunikationssignal ist, durchzuführen, wenn eine Verbindung zwischen der ersten Kommunikationseinrichtung und der Ausgabeeinrichtung (22) mittels der Dauersteuereinrichtung (103) elektrisch getrennt ist,
und bei dem die Sendestation (ECU 0, 1, 2, 4, 5) eine zweite Kommunikationseinrichtung aufweist, die das Informationssignal, das von der Empfangsstation (ECU 3) über die Kommunikationssignalleitung gesendet wird, zu empfangen und ein Steuersignal als das Kommunikationssignal über die Kommunikationssignalleitung zu der Empfangsstation (ECU 3) zu senden, und
eine Arithmetikoperationsverarbeitungseinrichtung aufweist, die mit der zweiten Kommunikationseinrichtung verbunden ist, die eine Arithmetikoperationsverarbeitung auf der Grundlage des Informationssignals durchführt, das mittels der zweiten Kommunikationseinrichtung empfangen wird und das Steuersignal auf der Grundlage eines Ergebnisses der Arithmetikoperationsverarbeitung erzeugt.

7. System nach Anspruch 6, das desweiteren eine Erfassungseinrichtung aufweist, die die elektrische Energieversorgungsspannung, die an die Empfangsstation (ECU 3) angelegt wird, erfaßt, bei dem die Dauersteuereinrichtung (103) eine Einrichtung aufweist, die die erste Kommunikationseinrichtung und die Ausgabeeinrichtung (22) elektrisch abtrennt, was einem Erfassen einer vorbestimmten Spannung mittels der Erfassungseinrichtung (102) für eine elektrische Energieversorgungsspannung folgt, bis die erste Kommunikationseinrichtung das Kommunikationssignal von der Sendestation (ECU 0, 1, 2, 4, 5) empfängt.

8. System nach Anspruch 7, bei dem die Dauersteuereinrichtung (103) angeordnet ist, um die erste Kommunikationseinrichtung und die Ausgabeeinrichtung (22) ebenso während einer Periode abzutrennen, bei welcher ein Niederspannungszustand mittels der Erfassungseinrichtung (102) erfaßt wird.

9. System nach einem der Ansprüche 1, 2 und 5, bei dem die Dauersteuereinrichtung (103) eine Empfangserfassungseinrichtung aufweist, die einen Empfang eines ersten Kommunikationssignals von der Sendestation (ECU 0, 1, 2, 4, 5) erfaßt, um die erste Kommunikationseinrichtung und die Ausgabeeinrichtung (22) wieder zu verbinden.

## Revendications

1. Système de communication pour un véhicule, comprenant une station de réception (ECU 3) qui comporte des moyens de communications (CPU) pour recevoir un signal de communication d'une station d'émission (ECU 0, 1, 2, 4, 5), des moyens de production d'une sortie (22) pour contrôler au moins un moyen à alimenter (21) en réponse au signal de communication, des moyens de contrôle de continuité (10) pour isoler les moyens de production d'une sortie (22) des moyens de communication suite à la mise sous tension de la station de réception (ECU 3), les moyens de production d'une sortie (22) pouvant fonctionner indépendemment du signal de communication quand les moyens de production d'une sortie (22) sont isolés, caractérisé en ce que les moyens de contrôle de continuité (103) sont disposés de façon à isoler les moyens de production d'une sortie (22) des moyens de communication jusqu'à ce que les moyens de communication reçoivent un signal de communication de la station d'émission.

2. Système de communication selon la revendication 1, dans lequel les stations d'émission (ECU 0, 1, 2, 4, 5) et la station de réception (ECU 3) sont disposées à distance dans le véhicule, la communication entre la station d'émission (ECU 0, 1, 2, 4, 5) et la station de réception (ECU 3) étant faite via une ligne de communication, des moyens de production d'une sortie (22) étant disposés pour contrôler une pluralité d'unités à alimenter (21) en réponse au signal de communication reçu par les dits moyens de communication, et le système comportant de plus des moyens de contrôle de continuité (103) pour déconnecter les moyens de production d'une sortie (22) des moyens de communication suite à la mise sous tension de la station de réception (ECU 3) jusqu'à ce que les moyens de communication reçoivent le signal de communication de la station d'émission (ECU 0, 1, 2, 4, 5), les moyens pour produire une sortie (22) étant susceptibles de fonctionner indépendemment du signal de communication quand les moyens de production d'une sortie (22) sont déconnectés.

3. Système selon la revendication 1 ou 2, comprenant de plus des moyens (102) pour détecter la tension d'alimentation d'une batterie (17) alimentant la station de réception (ECU 3), et dans lequel les moyens (103) de contrôle de continuité comportent des moyens pour déconnecter électriquement les moyens de communication et les moyens de production d'une sortie (22), suite à la détection d'une tension prédéterminée par des moyens (102) de détection de tension d'alimentation électrique, jusqu'à ce que les moyens de communication reçoivent un signal de communication de la station d'émission (ECU 0, 1, 2, 4, 5).

4. Système selon la revendication 3, dans lequel les moyens de contrôle de continuité (103) sont disposés de façon à déconnecter les moyens de communication et les moyens de production d'une sortie (22) aussi pendant une période au cours de laquelle une basse tension est détectée par les moyens de détection (102).

5. Système selon la revendication 1 ou 2, comprenant des moyens de détection de réception pour détecter la réception d'un premier signal de communication de la station d'émission (ECU 0, 1, 2, 4, 5), en réponse auxquels les moyens de contrôle de continuité (103) sont remis à zéro.

6. Système de communication selon l'une quelconque des revendications précédentes, dans lequel la station de réception (ECU 3) comporte des moyens pour produire une sortie (22), des moyens de contrôle de continuité (103) et
des premiers moyens de communication, pour entrer un signal d'entrée depuis les moyens d'entrée, pour émettre un signal d'information comprenant le dit signal d'entrée via la dite ligne de communication de signal,
les moyens de production d'une sortie (22) étant disposés de façon à exécuter le contrôle de l'alimentation d'une pluralité de moyens à alimenter (21) sur la base du signal de communication reçu par les premiers moyens de communication, et
les moyens de contrôle de continuité (103) étant disposés de façon à séparer la connexion électrique entre les premiers moyens de communication et les moyens pour produire une sortie (22) pendant une période au cours de laquelle l'alimentation électrique sur la station de réception (ECU 3) démarre jusqu'à ce que les premiers moyens de communication reçoivent le signal de communication de la station d'émission (ECU 0, 1, 2, 4, 5), les moyens de production d'une sortie (22) étant disposés de façon à exécuter le contrôle de l'alimentation de ladite pluralité de moyens à alimenter (21) dans un état initial désiré, quelque soit le dit signal de communication, quand la connexion entre les dits premiers moyens de communication et les dits moyens de production d'une sortie (22) est électriquement séparée au moyen des dits moyens de contrôle de continuité (103),
et dans lequel la dite station d'émission (ECU 0, 1, 2, 4, 5) comporte des second moyens de communication pour recevoir le signal d'information émis par la station de réception (ECU 3) via la ligne de communication de signal et pour émettre un signal de commande sur la station de réception (ECU 3) comme signal de communication via la ligne de communication de signal, et
des moyens de traitement d'opérations arithmétiques, connectés aux seconds moyens de communication, pour exécuter un traitement d'opérations arithmétiques sur la base du signal d'information reçu par les seconds moyens de communication et pour fabriquer le signal de commande sur la base du résultat d'un traitement d'opérations arithmétiques.

7. Système selon la revendication 6, comprenant de plus des moyens de détection pour détecter la tension d'alimentation électrique fournie à la dite station de réception (ECU 3), dans lequel les moyens de contrôle de continuité (103) comportent des moyens pour déconnecter électriquement les premiers moyens de communication et les moyens pour produire une sortie (22), suite à la détection par les moyens (102) de détection de tension d'alimentation électrique d'une tension prédéterminée, jusqu'à ce que les premiers moyens de communication reçoivent le signal de communication de la station d'émission (ECU 0, 1, 2, 4, 5).

8. Système selon la revendication 7, dans lequel les moyens de contrôle de continuité (103) sont disposés de façon à déconnecter les premiers moyens de communication et les moyens pour produire une sortie (22) aussi pendant une période au cours de laquelle un état de basse tension est détecté par les moyens de détection (102).

9. Système selon l'une quelconque des revendications 1, 2 et 5, dans lequel les moyens de contrôle de continuité (103) comportent des moyens de détection de réception pour détecter la réception d'un premier signal de communication de la station d'émission (ECU 0, 1, 2, 4, 5) pour reconnecter les premiers moyens de communication et les moyens pour produire une sortie (22).
